Europäisches Patentamt

European Patent Office

Office européen des brevets

(11) Veröffentlichungsnummer: **0 168 744**
**B1**

(12) **EUROPÄISCHE PATENTSCHRIFT**

(45) Veröffentlichungstag der Patentschrift: **10.10.90**

(51) Int. Cl.⁵: **H 02 K 5/15**

(21) Anmeldenummer: **85108432.7**

(22) Anmeldetag: **08.07.85**

(54) Lagerschild für Gleichstrom-Kleinstmotoren.

(30) Priorität: **16.07.84 DE 3426124**

(43) Veröffentlichungstag der Anmeldung:
**22.01.86 Patentblatt 86/04**

(45) Bekanntmachung des Hinweises auf die
Patenterteilung:
**10.10.90 Patentblatt 90/41**

(84) Benannte Vertragsstaaten:
**AT DE FR GB NL**

(56) Entgegenhaltungen:
**AT-B- 243 363**
**DE-A-1 939 220**
**DE-B-1 224 399**
**GB-A-1 297 329**

(73) Patentinhaber: **Braun Aktiengesellschaft**
**Rüsselsheimer Strasse 22**
**D-6000 Frankfurt/Main (DE)**

(72) Erfinder: **Trebitz, Bernd, Dr.**
**Mayers Gärten 13**
**D-6240 Königstein (DE)**
Erfinder: **Tewes, Bernd**
**Am Wald 1**
**D-6200 Wiesbaden-Medenbach (DE)**
Erfinder: **Klawuhn, Manfred**
**Leerbachstrasse 62**
**D-6000 Frankfurt/Main (DE)**

(74) Vertreter: **Einsele, Rolf**
**Braun Aktiengesellschaft Postfach 1120**
**Frankfurter Strasse 145**
**D-6242 Kronberg Taunus (DE)**

Courier Press, Leamington Spa, England.

## Beschreibung

Gegenstand der Erfindung ist ein Lagerschild für Gleichstrom-Kleinstmotoren, desse Grundkörper und Lagergehäuse als einstückiges Kunststoffspritzteil ausgebildet sind und dessen Zylinderlager für die Rotorwelle zusammen mit dem Grundkörper und dem Lagergehäuse gefertigt ist, wobei das Lagerschild an seinem dem Stator des Motors zugewandten Umfang Rastmittel aufweist.

Ein solches Lagerschild ist aus der GB—PS 1 297 329 bekannt. Die am Umfang des Lagerschilds vorgesehen Rastmittel dienen zur Einrastung in das Motorgehäuse, das heißt das Lagerschild und damit die Rotorlage ist durch Motorgehäuse festlegt. Zwischen der Achse es Motorgehäuses und der Achse des Magneten bzw. der Magnete ergeben sich aber meist verhältnismäßig große Toleranzen, so daß der Luftspalt zwischen Rotor und Magnet verhältnismäßig groß vorgesehen werden muß, wodurch der Wirkungsgrad des Motors verschlechtert wird.

Aus der Zeichnung der DE—B—1 224 399 ist ebenfalls ein einstückig ausgebildetes Lagerschild entnehmbar, wobei über das Material bzw. die Herstellung dieses Lagerschilds nichts offenbart ist. Die am Umfang des Lagerschilds vorhandenen Rastmittel dienen zur Einrastung in Nuten von L-förmigen Teilen, die das Magnetjoch bilden, so daß auch hier, aufgrund der Toleranzen, der Luftspalt zwischen Rotor und Magnet verhältnismäßig groß vorgesehen werden muß.

Aus der DE—A—27 11 560 ist ein Wellenlager für Gleichstromg-Kleinstmotoren bekannt, dessen Lager aus mehreren symmetrisch angeordneten Stegen besteht, die unter mechanischer Spannung gegen die Welle anliegen und die mit ihren Enden im Motorgehäuse festgelegt sind.

Diese Lösung hat u.a., wie die Anordnung der GB—PS 1 297 329, den Nachteil, daß die Enden im Motorgehäuse festgelegt sind. Außerdem unterliegen die Stege, an denen die Rotorwelle des Motors nur punkt- oder linienförmig anliegt, einem großen Verschließ.

Aufgabe der Erfindung ist es, ein Lagerschild der eingangs genannten Art so auszubilden, daß es bei verbessertem Wirkungsgrad des Motors kostengünstig herstellbar ist und eine einfache Montage erlaubt.

Diese Aufgabe wird dadurch gelöst, daß die Rastmittel zur Einrastung in einem mit entsprechenden Ausnehmungen versehenen, gespritzten Kunststoffmagneten oder in einem mit entsprechenden Ausnehmungen versehenen, zusammen mit dem Kunststoffmagneten gespritzten Rückschluß dienen und daß die Lageranbindung des Lagergehäuses an den Grundkörper als Ausgleichsfolie ausgebildet ist.

Diese Lösung hat den Vorteil, daß der Motor, trotz der kostengünstigen Herstellung des Lagerschilds, einen guten Wirkungsgrad erreicht, da die Mittelachse des Magneten mit der Mittelachse des Lagers ziemlich genau fixiert wird, weil sowohl der Kunststoffmagnet oder der zusammen mit dem Kunststoffmagneten gespritzte Rückschluß als auch das Lagerschild einstückig gespritzte Teile sind und somit verhältnismäßig geringe Herstellungstoleranzen aufweisen. Außerdem wird ein eventueller Winkelversatz zwischen der Rotorwelle und der Achse des Zylinderlagers ausgeglichen.

Ausgestaltungen der Erfindung sind in den Unteransprüchen beschreiben.

Im folgenden wird die Erfindung an Hand von in der Zeichnung dargestellten Ausführungsbeispielen näher erläutert. Es zeigt:

Fig. 1 den Schnitt eines kommutatorseitigen Lagerschilds ohne Stromübertragungseinrichtungen,

Fig. 2 die Gesamtansicht eines Motors im Schnitt, wobei die Motorschilde in einen Kunststoffmagneten eingeklipst sind,

Fig. 3 den Schnitt eines Stators, wobei der Rückschluß zusammen mit dem Kunststoffmagneten gespritzt ist,

Fig. 4 die perspektivische Ansicht eines kommutatorseitigen Lagerschilds,

Fig. 5 den Ausschnitt der Wand eines Gerätechassis,

Fig. 6 die ausschnittsweise Seitenansicht eines antriebseitigen Lagerschilds,

Fig. 7 die Draufsicht des Lagerschilds nach Fig. 6.

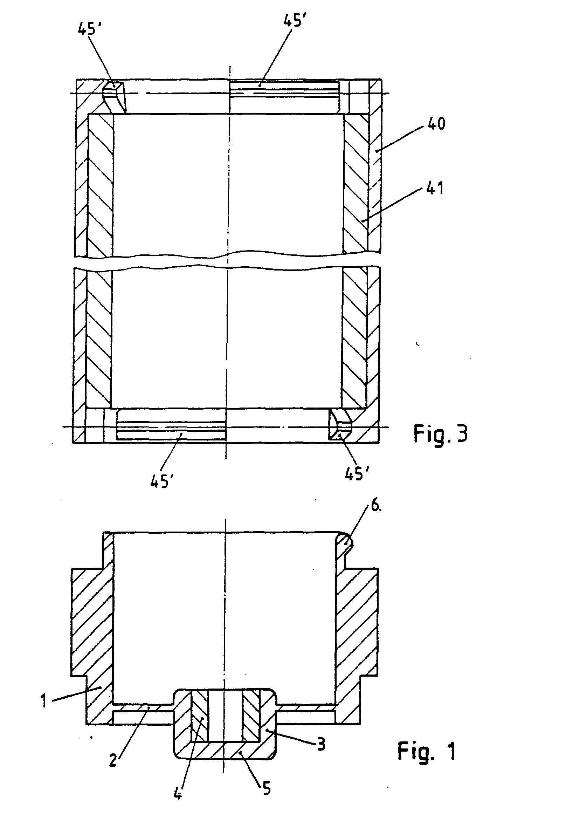

Das in Fig. 1 ohne Stromübertragungseinrichtungen dagestellte kommutatorseitige Lagerschild besteht aus einem Grundkörper 1, einem Lagergehäuse 3, das mittels der Ausgleichsfolie 2 mit dem Grundkörper verbunden ist, einem Zylinderlager 4, einer Anlaufscheibe 5 und drei federnd ausgebildeten Rastnasen 6, die im Winkel von 120° am Umfang der dem Stator zugewandten Seite des Lagerschilds angebracht sind.

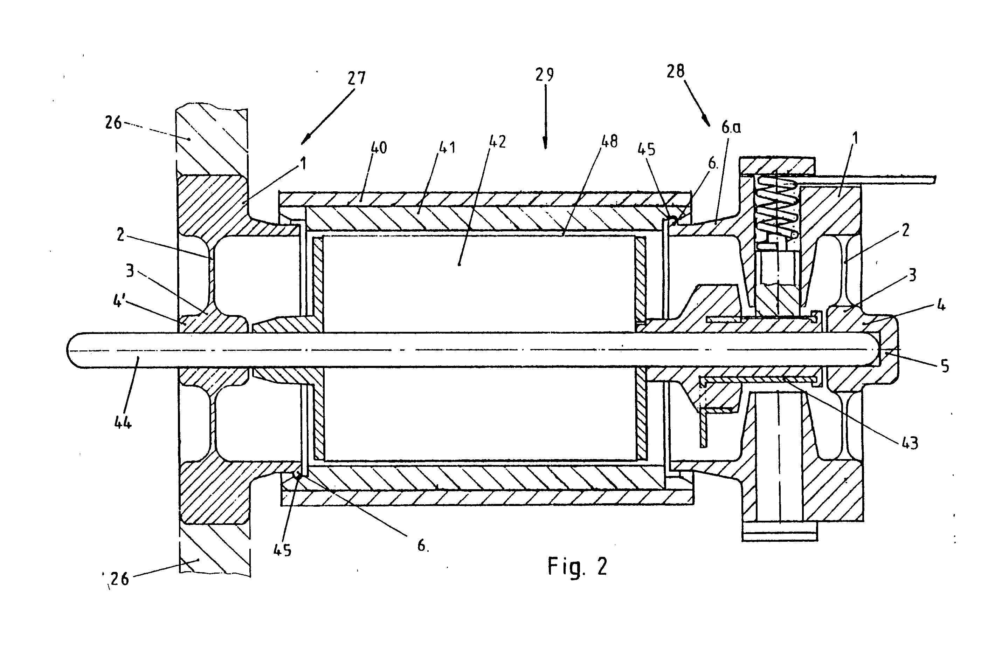

Das Zylinderlager 4 kann entweder schon bei der Herstellung des Lagerschilds mit eingespritzt werden oder gleich zusammen mit den übrigen Teilen einstückig gespritzt werden (vgl. Fig. 2). Die als Ausgleichsfolie 2 ausgebildete Lageranbindung dient zum Ausgleich eines eventuellen Winkelversatzes zwischen Rotorwelle und Lagerachse.

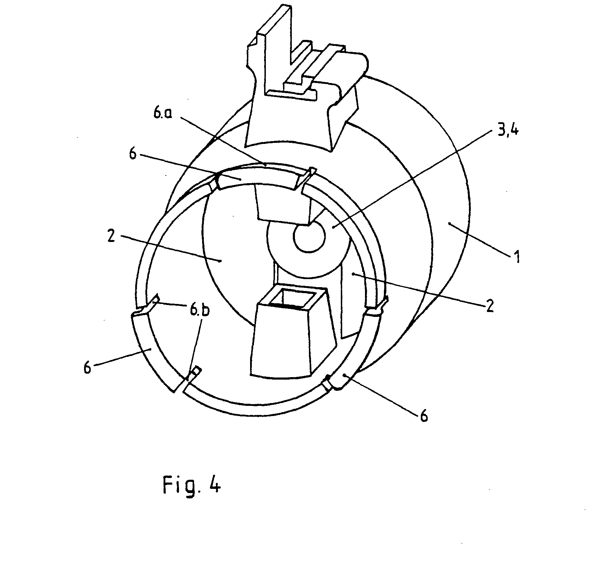

Eine solche Ausgestaltung des Lagerschilds ist nur möglich, weil das Lagerschild mittels der Rastnasen 6 direkt in entsprechende Ausnehmungen eines gespritzten Kunststoffmagneten (Fig. 2) oder in entsprechende Ausnehmungen eines zusammen mit dem Kunststoffmagneten gespritzten Rückschlusses (Fig. 3) geklipst wird.

Der in Fig. 2 dargestellte Motor besteht im wesentlichen aus dem Stator 29 mit dem Rückschluß 40 und dem gespritzten Kunststoffmagneten 41, dem Rotor 42 mit dem Kollektor 43 und der Welle 44, sowie aus dem antriebsseitigen Lagerschild 27 und dem kommutatorseitigen Lagerschild 28. Hierbei sind beide Lagerschild 27 und 28 mit den jeweils drei Rastnasen 6 in entsprechende Ausnehmungen 45 des ringförmigen oder ringsegmentförmigen Kunststoffmagneten 41 geklipst.

Das kommutatorseitige Lagerschild 28 ist einschließlich des Zylinderlagers 4 und der Anlaufscheibe 5 einstückig gespritzt. Das Lager 4' des antriebseitigen Lagerschilds 27 ist durchgehend, weist also keine Anlaufscheibe auf, ist aber ebenfalls einstückig gespritzt.

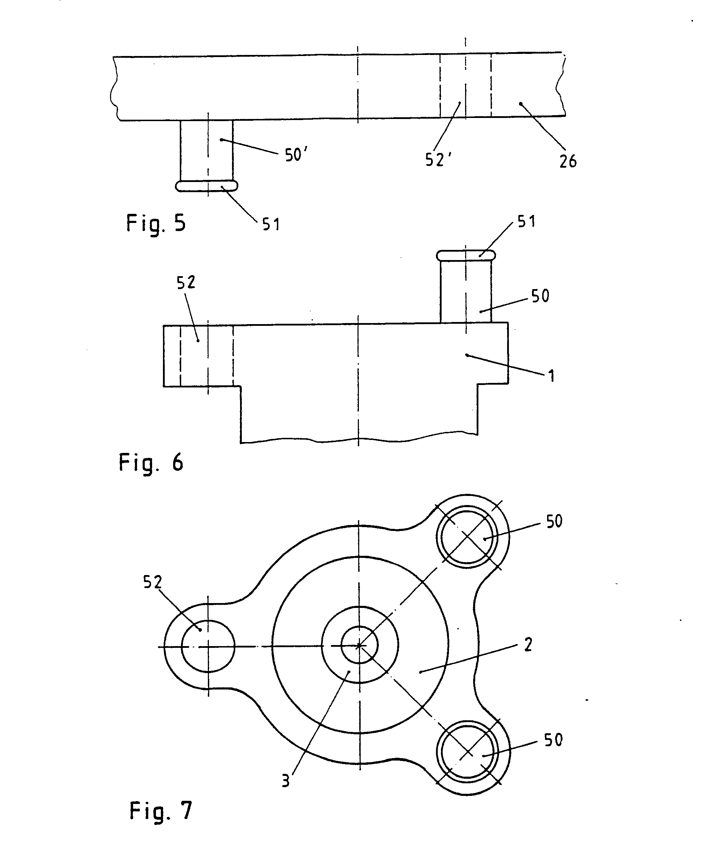

Eine einfache Einrichtung zur schnellen Montage des antriebseitigen Lagerschilds und damit des Motors an eine Wand des Gehäusechassis 26 ist in den Fig. 5—7 dargestellt. Am Umfang des Lagerschilds, der dem Stator des Motors abgewandt ist, sind zwei Zapfen 50 und eine Bohrung 52 vorgesehen, die ebenfalls einstückig mit dem Lagerschild gespritzt sind. An den entsprechend gegenüberliegenden Stellen des Gehäusechassis 26 sind als Gegenstück zwei Bohrungen 52' und ein Zapfen 50' vorgesehen, so daß der Motor auf einfache Weise in das Gehäusechassis eingeklipst werden kann. Am Ende der Zapfen 50 sind halbkreisförmige Wulste 51 angebracht, deren Durchmesser soviel größer als der Durchmesser der Bohrungen 52' ist, daß die Streckgrenze des Chassismaterials nicht überschritten wird und somit nur eine elastische Verformung im Fügevorgang stattfindet. Die Wulste und Bohrungen sind so versetzt angeordnet, daß das Lagerschild nur in einer Orientierung in das Gerätechassis einsetzbar ist.

Eine weitere Vereinfachung der Montage und Verbilligung der Herstellung kann dadurch erfolgen, daß das antriebseitige Lagerschild 27 in das Gerätechassis 26 integriert wird, das heißt das Lagerschild und das Gerätechassis werden einstückig gespritzt (vgl. Fig. 2). Der Stator 29 mit dem kommutatorseitigen Lagerschild 28 und dem Rotor 42 braucht dann nur noch in das Lagerschild 27, welches in das Gehäusechassis 26 integriert ist, eingeklipst werden; eine weitere Montage an das Gerätechassis entfällt.

Fig. 3 zeigt einen Stator, dessen Rückschluß 40 zusammen mit dem Kunststoffmagneten 41 gespritzt ist. In diesem Fall können die Lagerschilde auch in Ausnehmungen 45' des Rückschlusses 40 eingeklipst werden.

In Fig. 4 ist am Beispiel eines kommutatorseitigen Lagerschilds für Kohlebürsten perspektivisch dargestellt, wie die Rastmittel die zur Einrastung in Ausnehmungen des Kunststoffmagneten oder des Rückschlusses dienen, ausgestaltet sein können. An der dem Stator zugewandten Umfang des Grundkörpers 1 sind über Verbindungsstege 6a Rastmittel angebracht, die in diesem Fall aus drei gleichmässig am Umfang des Grundkörpers angebrachten Nasen 6 bestehen. Diese Rastnasen 6 schnappen bei der Montage des Motors direkt in die entsprechenden Ausnehmungen 45 oder 45' des Kunststoffmagneten 41 oder Rückschlusses 40 ein. Die Rastnasen 6 bzw. die Verbindungsstege 6a sind jeweils durch Entlastungsschlitze 6b begrenzt, wobei mit der Tiefe der Entlastungsschlitze 6b die Klipseigenschaften weitestgehend bestimmt werden. Die Formgebung der Rastnasen 6 und deren Verbindungsstege 6a zum Grundkörper 1 beeinflussen die Rastung. Die Ausgleichsfolie 2 ist hier aus spritztechnischen Gründen (wegen der Schächte zur Aufnahme der Kohlebürsten) geteilt, wodurch aber die Funktion nicht beeinträchtigt wird.

Bezugszeichenliste für 05149

1 Grundkörper eines Lagerschilds
2 Ausgleichsfolie
3 Lagergehäuse
4 Lager (Zylinderlager) von 28
4' Lager (Zylinderlager) von 27
6 Ratnasen
11 Sacklochartige Ausnehmungen zur Befestigung
27 Antriebseitiges Lagerschild
28 Kommutatorseitiges Lagerschild
29 Stator
40 Rückschluß
41 Kunststoffmagnet
42 Rotor
43 Kollektor
44 Welle (Rotorwelle)
45 Ausnehmungen im Kunststoffmagnet 41
45' Ausnehmungen im Rückschluß 40
46 Ausgleichsnut im Magnet 41
46' Ausgleichsnut im Rückschluß 40
47 Schräge an der Stirnseite des Magneten 41
47' Schräge an der Stirnseite des Rückschlusses 40
48 Luftspalt zwischen Rotor 42 und Magnet 41

**Patentansprüche**

1. Lagerschild für Gleichstrom-Kleinstmotoren, dessen Grundkörper (1) und Lagergehäuse (3) als einstückiges Kunststoffspritzteil ausgebildet sind und dessen Zylinderlager (4) für die Rotorwelle (44) zusammen mit dem Grundkörper (1) und dem Lagergehäuse (3) gefertigt ist, wobei das Lagerschild an seinem dem Stator (29) des Motors zugewandten Umfang Rastmittel (6) aufweist, dadurch gekennzeichnet, daß die Rastmittel (6) zur Einrastung in einen mit entsprechenden Ausnehmungen (45) versehenen, gespritzen Kunststoffmagneten (41) oder in einen mit entsprechenden Ausnehmungen (45') versehenen, zusammen mit dem Kunststoffmagneten (41) gespritzten Rückschluß (40) dienen und daß die Lageranbindung des Lagergehäuses (3) an den Grundkörper (1) als Ausgleichsfolie (2) ausgebildet ist.

2. Lagerschild nach Anspruch 1, dadurch gekennzeichnet, daß die Rastmittel aus gleichmäßig am Umfang angebrachten, gegenüber dem Grundkörper (1) mittels eines Verbindungssteges (6a) federnden Rastnasen (6) bestehen, wobei die Rastnasen (6) bzw. die Verbindungsstege (6a) jeweils durch Entlastungsschlitze (6b) begrenzt sind.

3. Kommutatorseitiges Lagerschild (28) nach Anspruch 1, dadurch gekennzeichnet, daß die Anlaufscheibe (5) für die Rotorwelle (44) einstückig mit dem Lagerschild bzw. dem Lagergehäuse (3) gespritzt ist.

4. Antriebseitiges Lagerschild (27) nach Anspruch 1, dadurch gekennzeichnet, daß an seinem dem Stator (29) des Motors abgewandten Umfang ein oder mehrere Zapfen (50) mit Wulst (51) und/oder ein oder mehrere Bohrungen (52) vorgesehen sind, so daß das Lagerschild (27) in entsprechend als Gegenstück ausgebildete Bohrungen (52') und/oder Zapfen (50') des Gerätechassis (26) einrastbar ist.

5. Lagerschild nach Anspruch 4, dadurch gekennzeichnet, daß der Durchmesser des Wulstes (51) der Zapfen (50, 50') etwas größer und der Durchmesser der Zapfen (50, 50') etwas kleiner als der Durchmesser der entsprechenden Bohrungen (52', 52) ist.

6. Lagerschild nach Anspruch 4, dadurch gekennzeichnet, daß die Zapfen (50) und Bohrungen (52) so versetzt angeordnet sind, daß das Lagerschild (27) nur in einer Orientierung in das Geräteschassis (26) einrastbar ist.

7. Antriebseitiges Lagerschild (27) nach Anspruch 1, dadurch gekennzeichnet, daß es in das Gerätechassis (26) integriert ist.

## Revendications

1. Palier-flasque pour micromoteurs à courant continu, dont le corps de base (1) et le carter (3) des paliers sont conçus comme élément injecté en plastique d'une seule pièce et dont le coussinet cylindrique (4) pour l'arbre du rotor (44) est fabriqué avec le corps de base (1) et avec le carter (3) des paliers, le palier-flasque présentant des moyens de crantage (6) à sa périphérie située du côté du stator (29) du moteur caractérisé en ce que les moyens de crantage (6) servent au crantage dans un aimant synthétique injecté (41) et muni d'évidements appropriés (45) ou bien dans une armature (40) injectée en même temps que l'aimant synthétique (41) et munie d'évidements appropriés (45'); et en ce que liaison entre le carter (3) des paliers et le corps de base (1) est conçue sous forme d'une toile de compensation (2).

2. Palier-flasque selon la revendication 1, caractérisé en ce que les moyens de crantage sont constitués de talons de crantage (6) régulièrement rapportés à la périphérie et rendus élastiques par rapport au corps de base (1) au moyen d'une barrette de liaison (6a), les talons de crantage (6) ou les barrettes de liaison (6a) étant respectivement limités par des fentes de décharge (6b).

3. Palier-flasque (28) côté commutateur, selon la revendication 1, caractérisé en ce que le disque (5) de démarrage de l'arbre du rotor (44) est injecté d'une pièce avec le palier-flasque ou avec le carter (3) des paliers.

4. Palier-flasque (27) situé du côté entrainement, selon la revendication 1, caractérisé en ce qu'à sa périphérie opposée au stator (29) du moteur sont prévus un ou plusieurs tétons (50) avec bourrelet (51) et/ou un ou plusieurs perçages (52), de sorte que le palier-flasque (27) peut se cranter dans des perçages (52') et/ou des tétons (50') du châssis (26) conçus de façon appropriée comme contre-pièce.

5. Palier-flasque selon la revendication 4, caractérisé en ce que le diamètre du bourrelet (51) des tétons (50, 50') est un peu supérieur au diamètre de perçage correspondant (52', 52) tandis que le diamètre des tétons (50, 50') lui est un peu inférieur.

6. Palier-flasque selon la revendication 4, caractérisé en ce que les tétons (50) et les perçages (52) sont disposés décalés de façon que l'on ne puisse cranter le palier-flasque (27) dans le châssis (26) que selon une seule orientation.

7. Palier-flasque (27) situé du côté entrainement, selon la revendication 1, caractérisé en ce qu'il est incorporé dans le châssis (26).

## Claims

1. An end shield for direct-current miniature motors whose body (1) and bearing housing (3) are configured as an integrally formed injection-molded plastics part and whose cylindrical bearing (4) for the rotor shaft (44) is manufactured together with the body (1) and the bearing housing (3), with the end shield having locking means (6) provided on its circumference at the side facing the stator (29) of the motor, characterized in that the locking means (6) serve for locking engagement with an injection-molded plastics magnet (41) provided with corresponding recesses (45) or with a stator frame (40) injection-molded together with the plastics magnet (41) and provided with corresponding recesses (45'), and that the connection of the bearing housing (3) to the body (1) is accomplished by means of a compensating foil (2).

2. The end shield as claimed in claim 1, characterized in that the locking means are comprised of latch members (6) evenly spaced over the periphery and resilient relative to the body (1) by means of a connecting member (6a) with the latch members (6) and the connecting members (6a) being bounded by relief slots (6b).

3. The end shield (28) at the side facing the commutator as claimed in claim 1, characterized in that the friction washer (5) for the rotor shaft (44) is integrally injection-molded with the end shield or the bearing housing (3).

4. The end shield (27) at the driving end as claimed in claim 1, characterized in that it has on its circumference at the side facing away from the stator (29) of the motor one or several tenons (50) with a bead (51) and/or one or several bores (52), so that the end shield (27) is lockingly engageable with complementary bores (52') and/or tenons (50') of the chassis (26).

5. The end shield as claimed in claim 4, characterized in that the diameter of the bead (51) of the tenons (50, 50') is somewhat larger and the diameter of the tenons (50, 50') is somewhat smaller than the diameter of the corresponding bores (52, 52').

6. The end shield as claimed in claim 4, characterized in that the tenons (50) and bores (52) are relatively staggered in such fashion that the end shield (27) is lockingly engageable in the chassis (26) in one single orientation only.

7. The end shield (27) at the driving end as claimed in claim 1, characterized in that it is integrated into the chassis (26).

45'     45'

40

41

Fig. 3

45'     45'

6.

1

2

3

4     5

Fig. 1

Fig. 2

Fig. 4

Fig. 5

Fig. 6

Fig. 7